# EUROPÄISCHE PATENTSCHRIFT

(11) **EP 3 353 015 B1**
(45) Veröffentlichungstag und Bekanntmachung des Hinweises auf die Patenterteilung: **25.09.2019**
(21) Anmeldenummer: 17701996.5
(22) Anmeldetag: 20.01.2017
(51) Int. Cl.: B60R 13/00, G09F 7/00

(54) **METALLISCH GLÄNZENDES TEIL**
SHINY METALLIC PART
PIÈCE À BRILLANCE MÉTALLIQUE

(30) Priorität: 09.03.2016 DE 102016002831
(43) Veröffentlichungstag der Anmeldung: 01.08.2018
(73) Patentinhaber: Linden GmbH, 58515 Lüdenscheid (DE)
(72) Erfinder: NOLTE, Christian, 58540 Meinerzhagen (DE); RABENER, Mark, 58119 Hagen (DE); TRAMBEREND, Jörg, 58791 Werdohl (DE)
(74) Vertreter: Cohausz Hannig Borkowski Wißgott
(86) Internationale Anmeldenummer: PCT/EP2017/000067
(87) Internationale Veröffentlichungsnummer: WO 2017/153024

(56) Entgegenhaltungen:
- EP-A1- 2 311 689
- EP-A2- 0 791 911
- DE-A1- 10 318 790

## Beschreibung

Die Erfindung betrifft ein metallisch glänzendes Teil als Emblem, Verzierung, Schriftzug oder Leiste insbesondere an einem Fahrzeug mit einer metallenen oder metallisierten äußeren, vorderseitigen Oberseite, die eine obere Ebene und eine tiefer liegende, zur oberen Ebene parallele und/oder schräge untere Ebene bildet, wobei auf der unteren Ebene Bereiche vorstehen, die Zeichen, Buchstaben, Zahlen, Ränder und/oder graphische Bereiche bilden, die mit ihrer oberen Außenfläche in der oberen Ebene liegen und wobei die zwischen den vorstehenden Bereichen liegenden, unteren Zwischenflächen der unteren Ebene mit mindestens einem Farblack bedeckt sind.

Es ist an sich bekannt, ein für ein Kraftfahrzeug vorgesehenes Emblem durch Tintenstrahldruck mit Farbe zu versehen, siehe EP 2 327 588 B1. Ein solches Drucken erfolgte bisher aber nur bei Emblemen, bei denen die zu bedruckende Fläche eben war ohne Vorsprünge.

Bei Emblemen mit vorstehenden Bereichen ist es bekannt, die gesamte vorderseitige Oberseite mit einem Lack zu versehen, so dass die oberen Außenflächen der vorstehenden Bereiche, die Seitenflächen der vorstehenden Bereiche und die Zwischenflächen zwischen den vorstehenden Bereichen mit demselben Lack beschichtet sind, obwohl an sich gewünscht ist, die oberen Außenflächen der vorstehenden Bereiche von Lack frei zu haben. Um dies zu erreichen, ist es bekannt, nach dem Auftragen und Trocknen des Lacks die Oberseite des chromglänzenden Teils mit einem Lösungsmittel so lange von Hand abzuwischen, bis die chromglänzenden Flächen der oberen Außenflächen wieder sichtbar sind. Müssen mehrere unterschiedliche Farben aufgetragen werden, so sind diese Arbeitsschritte jeweils zu wiederholen.

Aufgabe der Erfindung ist es, ein vorstehende Bereiche aufweisendes metallisch glänzendes insbesondere chromglänzendes Teil mit geringem Herstellungsaufwand in der Weise zu produzieren, dass die zwischen den vorstehenden Bereichen liegenden unteren Zwischenflächen allein mit Lack versehen werden und hierbei die oberen Außenflächen und seitlichen Flächen bzw. Flanken der vorstehenden Bereiche von Lack frei bleiben, so dass nachträgliche Arbeitsschritte von Hand eingespart werden können.

Diese Aufgabe wird erfindungsgemäß dadurch gelöst, dass der Farblack auf die unteren Zwischenflächen durch mindestens eine rechnergesteuerte Düse tröpfchenförmig aufgebracht ist.

Eine auf diese Weise hergestelltes metallisch glänzendes insbesondere chromglänzendes Teil erfordert während der Herstellung keine zusätzlichen Maßnahmen, um die oberen Außenflächen der vorstehenden Bereiche wieder frei zu legen und damit deren metallisch glänzende oder chromglänzende Flächen wieder sichtbar zu machen. Die oberen Außenflächen bleiben vielmehr von vornherein frei von Lack und es sind damit weniger Herstellungsschritte erforderlich. Zudem ist es bei zwei oder mehr Farben nicht erforderlich, jeweils einen erneuten Farbauftrags- und Abwischschritt durchzuführen, sondern alle Farben können gleichzeitig beim erstmaligen Auftragen verwendet werden.

Bei dem bekannten Herstellungsverfahren geschah es zudem, dass die senkrechten Außenränder, d. h. die Flanken der vorstehenden Bereiche durch das Aufsprühen des Lacks auch mit Lack versehen wurden, obwohl dies nicht immer gewünscht war. Bei dem erfindungsgemäßen Verfahren bleiben dagegen die Flanken frei von Lack.

Die Haltbarkeit des aufgetragenen Lacks wird dadurch verbessert, wenn auf dem Farblack ein transparenter Schutzlack aufgebracht ist. Auch ist hierbei von Vorteil, wenn der Farblack und/oder der Schutzlack UV-aushärtend ist.

Vorzugsweise ist der Farblack transluzenz. Auch ist es zweckmäßig, wenn der Grundkörper des metallisch glänzenden Teils aus Kunststoffspitzguss besteht.

Vorzugsweise wird vorgeschlagen, dass die obere und untere Ebene im gleichen Maße nach außen konvex oder nach innen konkav gewölbt sind. Damit sind auch Embleme herstellbar, die mehr oder weniger gebogen sind.

Von Vorteil ist, dass die seitlichen Flanken der vorstehenden Bereiche frei von Lack sind. Auch kann der Lack auf den unteren Zwischenflächen mehrfarbig sein und insbesondere Farbverläufe aufweisen.

Zum Herstellen eines vorstehende Bereiche aufweisenden metallisch glänzenden Teils mit den oben genannten Eigenschaften wird vorgeschlagen, dass der Grundkörper des metallisch glänzenden Teils zuerst durch Spritzgießen aus Kunststoff produziert wird, danach metallisiert wird und danach die zwischen den vorstehenden Bereichen befindlichen unteren Zwischenflächen durch mindestens eine rechnergesteuerte Düse mit Farblack bedeckt werden.

Besonders vorteilhaft ist es, wenn bei einem solchen Verfahren bei einem metallisch glänzenden Teil mit konvex oder konkav gewölbter Oberseite die Düse(n) entsprechend der Wölbung durch den Rechner auf gewölbten Bahnen geführt wird (werden). Alternativ wird vorgeschlagen, dass bei einem metallisch glänzenden Teil mit konvex oder konkav gewölbter Oberseite das metallisch glänzende Teil entsprechend seiner Wölbung durch den Rechner auf gewölbten Bahnen gegenüber dem/den still stehenden Düse(n) geführt wird.

Ausführungsbeispiele der Erfindung werden im Folgenden näher beschrieben. In der schematishen Zeichnung zeigt die
- Fig. 1: eine Draufsicht auf ein Emblem,
- Fig. 2: einen Schnitt nach II-II in Fig. 1,
- Fig. 3: eine Ausführung mit verschieden hohen vorstehenden Bereichen und verschieden hohen Zwischenflächen und
- Fig. 4: eine Ausführung ohne vorstehenden äußeren Rand.

Das erfindungsgemäße metallisch glänzende insbesondere chromglänzende Teil besteht aus Kunststoffspritzguss oder aus Metall und zumindest eine vorderseitige Oberseite 8 ist silber- oder metallisch insbesondere chromglänzend. Bei Verwendung von Kunststoff ist zumindest die Oberseite (Vorderseite) 8 metallisiert, um den glänzenden Eindruck zu erhalten. Ein solches glänzendes Teil wird als Emblem, Verzierung, Schriftzug oder Leiste vorzugsweise an Fahrzeugen insbesondere als Verzierung und/oder Kennzeichnung verwendet.

Das metallisch glänzende insbesondere chromglänzende Teil weist einen flachen Körper 1 auf mit einer gleichbleibenden Dicke D von 1 bis 20 mm am Rand 4 und in den übrigen Bereichen 2, die nicht vertieft sind und die im Folgenden "vorstehende Bereiche 2" genannt werden. Zwischen den vorstehenden Bereichen 2 liegen niedrigere Bereiche, die im Folgenden "untere Zwischenflächen 3" genannt werden. Die vorstehenden Bereiche 2 bilden im Ausführungsbeispiel Zeichen (Buchstaben, Zahlen) und können auch graphische Zeichen sein. Zudem weist das Emblem des Ausführungsbeispiels einen Rand 4 auf, der wie auch die vorstehenden Bereiche 2 eine obere Außenfläche 5 aufweist, wobei alle Außenflächen 5 in einer oberen Ebene 6 liegen, die durch die vorderseitige Oberseite 8 verläuft. Die unteren Zwischenflächen 3 liegen alle in mindestens einer unteren Ebene 7 und die beiden Ebenen 6, 7 sind vorzugsweise zueinander parallel. Hierbei kann das gesamte metallisch glänzende Teil leicht gebogen ausgeführt sein, so dass die obere und untere Ebene 6, 7 im gleichen Maße nach außen konvex oder nach innen konkav gewölbt sind und hierbei die Ebenen 6, 7 weiterhin zueinander parallel sind.

Die oberen Außenflächen 5 sollen beim metallisch glänzenden Teil glänzend bleiben und nur die dazwischen liegenden unteren Zwischenflächen 3 sollen einen Lack 9 erhalten. Hierzu wird eine Rechner gesteuerte Düse 10 in gleichbleibendem geringen Abstand über die Oberseite 8 des metallisch glänzenden Teils geführt und durch die Düse wird der Lack tröpfchenförmig auf die Zwischenflächen 3 gespritzt, wobei dafür gesorgt wird, dass keine Tröpfchen auf die Außenflächen 5 und die seitlichen Flanken 11 gelangen.

Nach dem Auftragen des Farblacks kann dann noch ein transparenter Schutzlack auf dem Farblack durch eine Düse aufgebracht werden. Dieser Schutzlack ist vorzugsweise UV-aushärtend. Auch der Farblack kann UV-aushärtend sein, so dass in beiden Fällen nach dem Auftragen des Lacks eine UV-Bestrahlung erfolgt.

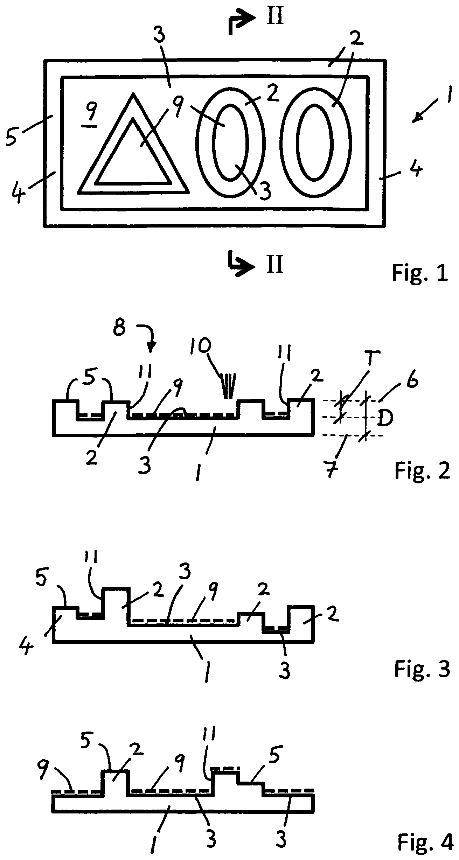

Die Fig. 3 und 4 zeigen, dass die vorstehenden Bereiche und/oder die unteren Zwischenflächen 3 in verschiedenen Ebenen liegen können, so dass auch unterschiedlich hohe Druckebenen bestehen können. Ferner können die Ebenen/Flächen leicht geneigt angeordnet sein und ferner kann das metallisch glänzende Teil ohne Außenrand gefertigt sein.

In der Zeichnung ist nur eine Düse 10 dargestellt. Es können aber auch mehrere Düsen nebeneinander angeordnet und rechnergesteuert sein, wie dies bei Tintenstrahldruckern üblich ist.

Damit die aufgetragene Farbe einen hohen Glanz erhält, ist der Farblack vorzugsweise transluzenz, so dass die metallisch glänzende Wirkung des Metalls oder der Metallisierung durch den Farblack hindurch scheint.

Während der gesamte Körper 1 eine Dicke D von 1 bis 6 mm aufweist, ist die Tiefe T der Vertiefungen zwischen den vorstehenden Bereichen 2 und damit der Abstand der Ebenen 6, 7 voneinander etwa 0,1 bis 4 mm. Diesen Abstand müssen die aus der Düse 10 austretenden Lacktröpfchen überwinden, wobei der Abstand des unteren Düsenendes zur Außenfläche 5 noch hinzukommt. Ein solch erheblich großer Weg der Lacktröpfchen vom Austreten aus der Düse bis

## Patentansprüche

1. Metallisch glänzendes Teil als Emblem, Verzierung, Schriftzug oder Leiste insbesondere an einem Fahrzeug mit einer metallenen oder metallisierten äußeren, vorderseitigen Oberseite (8), die eine obere Ebene (6) und eine tiefer liegende, zur oberen Ebene parallele und/oder schräge untere Ebene (7) bildet, wobei auf der unteren Ebene (7) Bereiche (2) vorstehen, die Zeichen, Buchstaben, Zahlen, Ränder und/oder graphische Bereiche bilden, die mit ihrer oberen Außenfläche (5) in der oberen Ebene (6) liegen und wobei ausschließlich die zwischen den vorstehenden Bereichen (2) liegenden, unteren Zwischenflächen (3) der unteren Ebene (7) mit mindestens einem Farblack (9) bedeckt sind, wobei der Farblack (9) auf die unteren Zwischenflächen (3) tröpfchenförmig aufgebracht ist.

2. Metallisch glänzendes Teil nach Anspruch 1, **dadurch gekennzeichnet, dass** auf dem Farblack (9) ein transparenter Schutzlack aufgebracht ist.

3. Metallisch glänzendes Teil nach Anspruch 2, **dadurch gekennzeichnet, dass** der Farblack (9) und/oder der Schutzlack UV-aushärtend ist.

4. Metallisch glänzendes Teil nach einem der vorherigen Ansprüche, **dadurch gekennzeichnet, dass** der Farblack (9) transluzent ist.

5. Metallisch glänzendes Teil nach einem der vorherigen Ansprüche, **dadurch gekennzeichnet, dass** es aus Kunststoffspritzguss besteht.

6. Metallisch glänzendes Teil nach einem der vorherigen Ansprüche, **dadurch gekennzeichnet, dass** die obere und untere Ebene (6, 7) im gleichen Maße nach außen konvex oder nach innen konkav gewölbt sind.

7. Metallisch glänzendes Teil nach einem der vorherigen Ansprüche, **dadurch gekennzeichnet, dass** die seitlichen Flanken (11) der vorstehenden Bereiche (2) frei von Lack sind.

8. Metallisch glänzendes Teil nach einem der vorherigen Ansprüche, **dadurch gekennzeichnet, dass** der Lack auf den unteren Zwischenflächen mehrfarbig ist und insbesondere Farbverläufe aufweist.

9. Verfahren zum Herstellen eines metallisch glänzenden Teils als Emblem, Verzierung, Schriftzug oder Leiste insbesondere an einem Fahrzeug mit einer metallenen oder metallisierten äußeren, vorderseitigen Oberseite (8), die eine obere Ebene (6) und eine tiefer liegende, zur oberen Ebene parallele und/oder schräge untere Ebene (7) bildet, wobei auf der unteren Ebene (7) Bereiche (2) vorstehen, die Zeichen, Buchstaben, Zahlen, Ränder und/oder graphische Bereiche bilden, die mit ihrer oberen Außenfläche (5) in der oberen Ebene (6) liegen und wobei ausschließlich die zwischen den vorstehenden Bereichen (2) liegenden, unteren Zwischenflächen (3) der unteren Ebene (7) mit mindestens einem Farblack (9) bedeckt sind,
wobei der Grundkörper (1) des metallisch glänzenden Teiles zuerst produziert wird, danach metallisiert wird und danach die zwischen den vorstehenden Bereichen (2) befindlichen unteren Zwischenflächen (3) durch mindestens eine rechnergesteuerte Düse (10) mit Farblack (9) bedeckt werden.

10. Verfahren nach Anspruch 9, **dadurch gekennzeichnet, dass** bei einem metallisch glänzenden Teil mit konvex oder konkav gewölbter Oberseite (8) die Düse(n) (10) entsprechend der Wölbung durch den Rechner auf gewölbten Bahnen geführt wird (werden).

11. Verfahren nach Anspruch 9, **dadurch gekennzeichnet, dass** bei einem metallisch glänzenden Teil mit konvex oder konkav gewölbter Oberseite (8) das metallisch glänzende Teil entsprechend seiner Wölbung durch den Rechner auf gewölbten Bahnen gegenüber dem/den still stehenden Düse(n) (10) geführt wird.

12. Verfahren nach einem der Ansprüche 9 bis 11, **dadurch gekennzeichnet, dass** der Grundkörper (1) des metallisch glänzenden Teiles zuerst durch Spritzgießen aus Kunststoff produziert wird.

## Claims

1. Metallic shiny part as an emblem, decoration, lettering, or strip, in particular on a vehicle, having a metallic or metallized external front upper side (8) which forms an upper plane (6) and a lower plane (7) that is parallel and/or oblique to the upper plane, wherein regions (2) which form signs, letters, numbers, peripheries, and/or graphic regions, project on the lower plane (7), said regions (2) by way of the upper external face (5) thereof lying in the upper plane (6), and wherein exclusively the lower intermediate faces (3) of the lower plane (7) that lie between the projecting regions (2) are covered with a least one coloured lacquer (9), wherein the coloured lacquer (9) in the form of drops is applied to the lower intermediate faces (3).

2. Metallic shiny part according to Claim 1, **characterized in that** a colourless protective lacquer is applied to the coloured lacquer (9).

3. Metallic shiny part according to Claim 2, **characterized in that** the coloured lacquer (9) and/or the protective lacquer are/is UV-curing.

4. Metallic shiny part according to one of the preceding claims, **characterized in that** the coloured lacquer (9) is translucent.

5. Metallic shiny part according to one of the preceding claims, **characterized in that** said metallic shiny part is composed of a plastic injection moulding.

6. Metallic shiny part according to one of the preceding claims, **characterized in that** the upper plane (6) and the lower plane (7) are convexly curved in an outward manner or concavely curved in an inward manner to the same degree.

7. Metallic shiny part according to one of the preceding claims, **characterized in that** the lateral flanks (11) of the projecting regions (2) are free of lacquer.

8. Metallic shiny part according to one of the preceding claims, **characterized in that** the lacquer on the lower intermediate faces is multicoloured and in particular has colour progressions.

9. Method for producing a metallic shiny part as an emblem, decoration, lettering, or strip, in particular on a vehicle, having a metallic or metallized external front-side surface (8) which forms an upper plane (6) and a lower plane (7) that is parallel and/or oblique to the upper plane, wherein regions (2) which form signs, letters, numbers, peripheries, and/or graphic regions, project on the lower plane (7), said regions (2) by way of the upper external face (5) thereof lying in the upper plane (6), and wherein exclusively the lower intermediate faces (3) of the lower plane (7) that lie between the projecting regions (2) are covered with a least one coloured lacquer (9), wherein the main body (1) of the metallic shiny part is first produced, thereafter is metallized, and thereafter the lower intermediate faces (3) that are situated between the projecting regions (2) are covered with coloured lacquer (9) by way of at least one computer-controlled nozzle (10).

10. Method according to Claim 9, **characterized in that** in the case of a metallic shiny part having a convexly or concavely curved upper side (8) the nozzle/nozzles(10) in a manner corresponding to the curvature is/are guided by the computer on curved paths.

11. Method according to Claim 9, **characterized in that** in the case of a metallic shiny part having a convexly or concavely curved upper side (8) the metallic shiny part in a manner corresponding to the curvature thereof is guided by the computer on curved paths in relation to the stationary nozzle/nozzles (10).

12. Method according to one of Claims 9 to 11, **characterized in that** the main body (1) of the metallic shiny part is first produced from plastics material by injection moulding.

## Revendications

1. Pièce à brillance métallique, en tant qu'emblème, ornement, inscription ou baguette, notamment sur un véhicule, comprenant un côté supérieur avant extérieur métallique ou métallisé (8), qui forme un plan supérieur (6) et un plan inférieur (7) situé plus bas, parallèle et/ou incliné par rapport au plan supérieur, des zones (2) en relief se trouvant sur le plan inférieur (7), qui forment des caractères, des lettres, des chiffres, des bords et/ou des zones graphiques dont la surface extérieure supérieure (5) se situe dans le plan supérieur (6), et les surfaces intermédiaires inférieures (3) du plan inférieur (7) situées entre les zones en relief (2) étant exclusivement recouvertes au moins avec un vernis coloré (9), le vernis coloré (9) étant appliqué sous forme de gouttelettes sur les surfaces intermédiaires inférieures (3).

2. Pièce à brillance métallique selon la revendication 1, **caractérisée en ce qu'**un vernis de protection transparent est appliqué sur le vernis coloré (9).

3. Pièce à brillance métallique selon la revendication 2, **caractérisée en ce que** le vernis coloré (9) et/ou le vernis de protection durcissent par UV.

4. Pièce à brillance métallique selon l'une quelconque des revendications précédentes, **caractérisée en ce que** le vernis coloré (9) est translucide.

5. Pièce à brillance métallique selon l'une quelconque des revendications précédentes, **caractérisée en ce qu'**elle est formée par moulage par injection d'une matière plastique.

6. Pièce à brillance métallique selon l'une quelconque des revendications précédentes, **caractérisée en ce que** le plan supérieur et le plan inférieur (6, 7) sont incurvés sous forme convexe vers l'extérieur ou sous forme concave vers l'intérieur dans une même mesure.

7. Pièce à brillance métallique selon l'une quelconque des revendications précédentes, **caractérisée en ce que** les flancs latéraux (11) des zones en relief (2) sont exempts de vernis.

8. Pièce à brillance métallique selon l'une quelconque des revendications précédentes, **caractérisée en ce que** le vernis sur les surfaces intermédiaires inférieures est multicolore, et comprend notamment des dégradés de couleur.

9. Procédé de fabrication d'une pièce à brillance métallique en tant qu'emblème, ornement, inscription ou baguette, notamment sur un véhicule, comprenant un côté supérieur avant extérieur métallique ou métallisé (8), qui forme un plan supérieur (6) et un plan inférieur (7) situé plus bas, parallèle et/ou incliné par rapport au plan supérieur, des zones (2) en relief se trouvant sur le plan inférieur (7), qui forment des caractères, des lettres, des chiffres, des bords et/ou des zones graphiques dont la surface extérieure supérieure (5) se situe dans le plan supérieur (6), et les surfaces intermédiaires inférieures (3) du plan inférieur (7) situées entre les zones en relief (2) étant exclusivement recouvertes au moins avec un vernis coloré (9), le corps de base (1) de la pièce à brillance métallique étant produit en premier, puis métallisé, puis les surface intermédiaires inférieures (3) qui se trouvent entre les zones en relief (2) étant recouvertes avec un vernis coloré (9) par au moins une buse commandée par ordinateur (10).

10. Procédé selon la revendication 9, **caractérisé en ce que**, pour une pièce à brillance métallique ayant un côté supérieur (8) incurvé sous forme convexe ou concave, la ou les buses (10) sont acheminées conformément à la courbure au travers de l'ordinateur sur des bandes incurvées.

11. Procédé selon la revendication 9, **caractérisé en ce que**, pour une pièce à brillance métallique ayant un côté supérieur (8) incurvé sous forme convexe ou concave, la pièce à brillance métallique est acheminée conformément à sa courbure au travers de l'ordinateur sur des bandes incurvées par rapport à la ou aux buses immobiles (10).

12. Procédé selon l'une quelconque des revendications 9 à 11, **caractérisé en ce que** le corps de base (1) de la pièce à brillance métallique est tout d'abord produit par moulage par injection à partir d'une matière plastique.
